# EUROPÄISCHE PATENTANMELDUNG

(11) **EP 0 909 686 A1**
(43) Veröffentlichungstag der Anmeldung: **21.04.1999**
(21) Anmeldenummer: 97118037.7
(22) Anmeldetag: 17.10.1997
(51) Int. Cl.: B60S 13/02, B60S 9/18

(54) **Dreheinrichtung für Lasten**

(71) Anmelder: Lagertechnik Gesellschaft m.b.H., 6961 Wolfurt (AT)
(72) Erfinder: Malin, Peter, 6922 Wolfurt (AT)
(74) Vertreter: Torggler, Paul Norbert

(57) **Zusammenfassung**

Eine Dreheinrichtung für Lasten mit einer Drehscheibe (2) und einem darauf fahrbaren Transportwagen (4). Die Drehscheibe (2) ist antriebslos ausgeführt und der Transportwagen (4) weist drei Räder (5, 6) auf, von denen eines lenkbar und angetrieben ist. Dieses Rad (6) ist während des Drehvorganges auf einer ortsfesten Fahrbahn verfahrbar, während die anderen Räder (5) sich auf der Drehscheibe (2) abstützen.

## Beschreibung

Die Erfindung bezieht sich auf eine Dreheinrichtung für Lasten mit einer Drehscheibe und einem darauf fahrbaren Transportwagen.

Insbesondere soll die Erfindung beim Abstellen von Fahrzeugen, beispielsweise in Parkgaragen, zum Einsatz kommen. Es sind Drehschemel bekannt, auf welche Fahrzeuge, beispielsweise Personenkraftwägen, auffahren und die dann manuell oder motorisch angetrieben gedreht werden.

Bei Großlagern ist es ebenfalls bekannt, die Waren in den Gängen zwischen den Regalen mittels Spezialfahrzeugen wie Hubstaplern zu verfahren.

Aufgabe der Erfindung ist es, eine Dreheinrichtung der eingangs erwähnten Art dahingehend zu verbessern, daß auf einen gesonderten Antrieb für die Drehscheibe verzichtet werden kann, wobei diese dennoch motorisch angetrieben wird.

Die erfindungsgemäße Aufgabe wird dadurch gelöst, daß die Drehscheibe antriebslos ausgeführt ist und der Transportwagen mindestens drei Räder aufweist, von denen mindestens eines lenkbar und angetrieben ist und daß dieses Rad während des Drehvorganges auf einer ortsfesten Fahrbahn verfahrbar ist, während die anderen Räder sich auf der Drehscheibe abstützen.

Die erfindungsgemäße Dreheinrichtung wird vorzugsweise bei Hubstaplern eingesetzt, die sich an genau definierten Orten um sich selber drehen sollen, beispielsweise an den Kreuzungspunkten von Lagergassen zwischen Hochregalen.

Die Drehscheibe ist vorzugsweise mit kreisförmigen Umriß ausgebildet und weist eine zum Rand offene Aussparung auf, innerhalb der das angetriebene Rad des Transportwagens aufgenommen wird. Anstelle einer Aussparung kann auch vorgesehen sein, daß der Rand der Drehscheibe von einem Kreisbogen und einer Sehne bestimmt wird. Auch in diesem Fall kommt es zu einer guten Gewichtsverteilung, wenn die Drehscheibe um eine zentrische Achse drehbar ist.

Um die Kraftübertragung vom angetriebenen Transportwagen auf die Drehscheibe zu verbessern, ist in einem bevorzugten Ausführungsbeispiel der Erfindung vorgesehen, daß die Drehscheibe nach oben vorstehende Anschläge aufweist, die sich beiderseits des Transportwagens befinden.

Um sicherzustellen, daß sich die Drehscheibe beim Auffahren des Transportwagens und nach dem Abfahren des Transportwagens in einer genau vorbestimmten Position befindet, sieht ein weiteres Ausführungsbeispiel der Erfindung vor, daß eine Sperreinrichtung für die Drehscheibe vorgesehen ist.

Die Stabilität der Drehscheibe kann dadurch verbessert werden, daß am Rand der Drehscheibe ortsfeste Führungselemente angeordnet sind, die vorzugsweise von Rollen gebildet werden.

Ein weiteres Ausführungsbeispiel der Erfindung sieht vor, daß am Transportwagen unterhalb des Fahrgestells eine nach unten absenkbare Stütze angeordnet ist, mittels der der Transportwagen derart anhebbar ist, daR lediglich ein lenkbares und antreibbares Rad mit Bodenkontakt verbleibt.

Nachfolgend werden verschiedene Ausführungsbeispiele der Erfindung anhand der Figuren der beiliegenden Zeichnungen beschrieben.

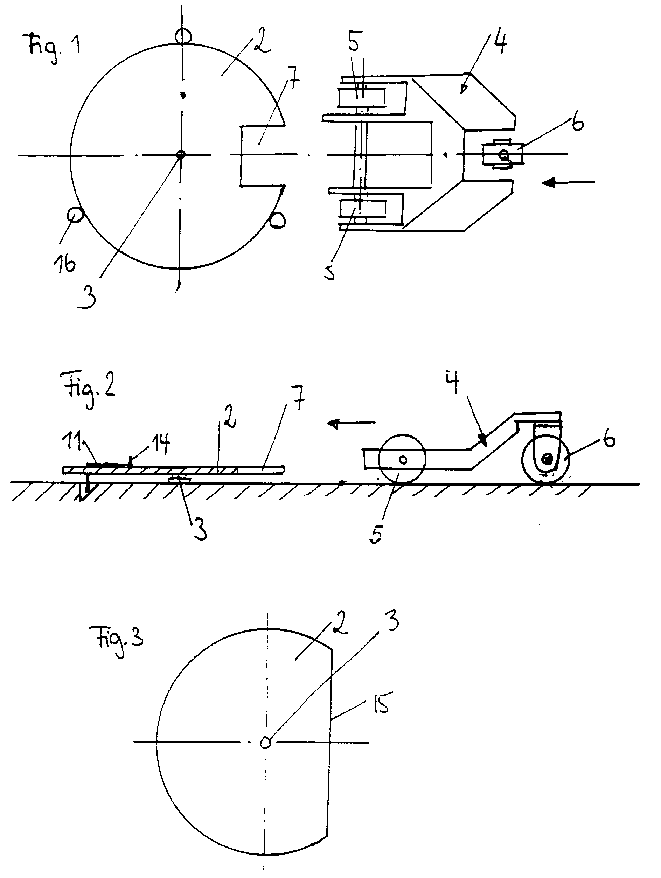

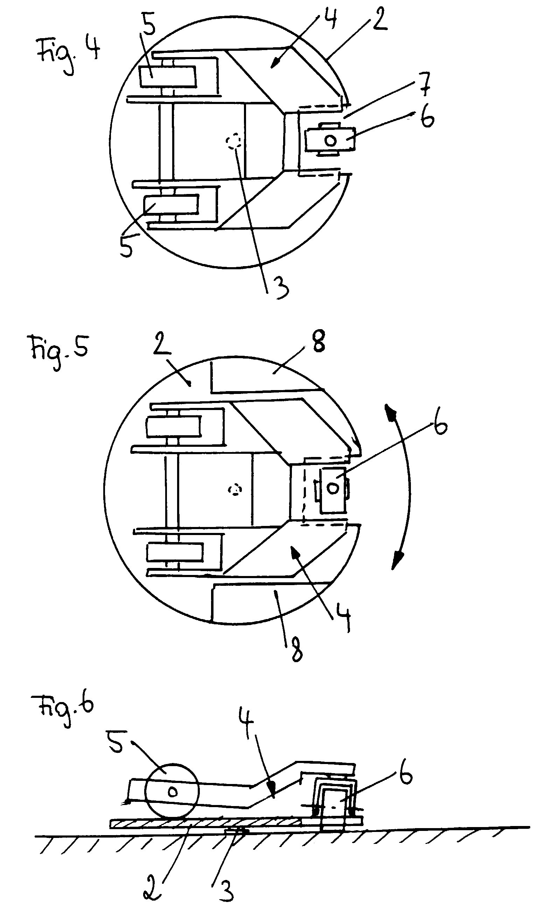

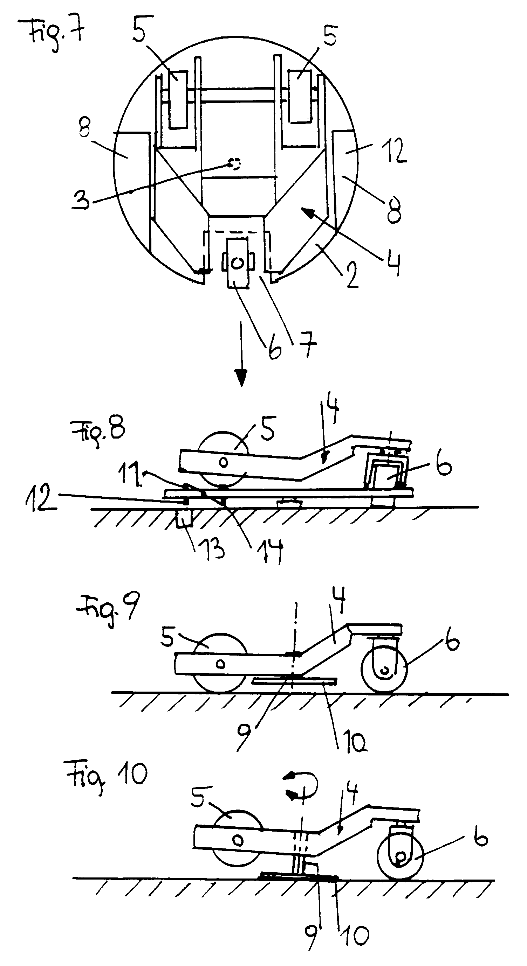

Die Fig. 1 zeigt schematisch gehaltene Draufsichten auf eine Drehscheibe und einen Transportwagen; die Fig. 2 zeigt je eine Seitenansicht der Drehscheibe und des Transportwagens; die Fig. 3 zeigt eine Draufsicht auf ein weiteres Ausführungsbeispiel einer Drehscheibe; die Fig. 4 und die Fig. 5 zeigen je eine Draufsicht auf einen auf der Drehscheibe befindlichen Transportwagen; die Fig. 6 zeigt eine Seitenansicht eines auf einer Drehscheibe befindlichen Transportwagens, wobei die Drehscheibe im Schnitt gezeichnet ist; die Fig. 7 zeigt eine Draufsicht auf eine Drehscheibe mit Transportwagen nach der Drehung; die Fig. 8 zeigt eine Seitenansicht des Transportwagens und einen Schnitt durch die Drehscheibe, wobei das Ausrasten der Sperreinrichtung gezeigt ist; die Fig. 9 zeigt eine Seitenansicht eines Transportwagens und einer Drehscheibe gemäß einem weiteren Ausführungsbeispiel der Erfindung in der fahrbereiten Stellung des Transportwagens und die Fig. 10 zeigt eine Seitenansicht des Transportwagens und der Drehscheibe in der Stellung, in der der Transportwagen drehbar, aber nicht linear verfahrbar ist.

Die Erfindung besteht aus einer am Boden 1 gelagerten Drehscheibe 2, die um eine mittige Achse 3 drehbar ist, und aus einem Transportwagen 4, der auf die Drehscheibe 2 auffahrbar ist. Als Transportwagen 4 wird beispielsweise ein Hubstapler mit einer Hebegabel eingesetzt.

Der Transportwagen 4 ist im gezeigten Ausführungsbeispiel mit drei Rädern versehen, wobei zwei Räder 5 ohne Antrieb auf starren Achsen gelagert sind und ein Rad 6 angetrieben und lenkbar ist.

Im Ausführungsbeispiel nach den Fig. 1 und 2 ist die Drehscheibe 2 mit einer Aussparung 7 versehen, die das angetriebene Rad 6 des Transportwagens 4 aufnimmt, wenn der Transportwagen 4 auf die Drehscheibe 2 aufgefahren ist.

Um den Transportwagen 4 um 90° zu drehen, wird dieser wie in der Fig. 1 gezeigt, in der Richtung des Pfeiles auf die Drehscheibe 2 aufgefahren, bis er die in der Fig. 4 gezeigte Position erreicht. Anschließend wird das angetriebene Rad 6 gedreht und die Drehscheibe 2 mit dem Transportwagen 4, wie in der Fig. 5 gezeigt, in der Richtung des Doppelpfeiles verfahren.

Damit es zu keinem Rutschen des Transportwagens 4 auf der Drehscheibe 2 kommt, kann die Drehscheibe 2 mit nach oben vorstehenden Anschlägen 8 versehen sein, zwischen denen das Transportwagen 4 aufgenommen ist.

Befindet sich der Transportwagen 4 mit der Drehscheibe 2 in der gewünschten Stellung (Fig. 7), so wird das angetriebene Rad 6 wiederum um 90° gedreht und der Transportwagen 4 kann von der Drehscheibe 2 heruntergefahren werden.

Durch die erfindungsgemäße Ausführung des Transportwagens 4 und der Drehscheibe 2 benötigt die Drehscheibe 2 für die Drehung keinen eigenen Antrieb.

Damit die Drehscheibe 2 nicht unbeabsichtigt verdreht wird, ist sie mit einer Sperreinrichtung versehen. Die Sperreinrichtung wird beispielsweise von einer Wippe 11 gebildet, die einen Sperrzapfen 12 trägt, der, wenn sich kein Transportwagen auf der Drehscheibe 2 befindet, in einer Öffnung 13 im Boden 1 aufgenommen ist.

Fährt der Transportwagen 4 auf die Drehscheibe 2 und hat seine richtige Position erreicht, drückt eines der Räder 5 auf einen Anschlag 14 der Wippe 11 und bewegt den Bolzen 12 aus seiner Raststellung nach oben. Die Drehscheibe 2 ist nun frei bewegbar.

Anstelle der Aussparung 7 kann die Drehscheibe 2, wie in der Fig. 3 gezeigt, auch entlang einer Sehne 15 abgeschnitten werden, wodurch der Transportwagen 4 wiederum im Gleichgewicht auf der Drehscheibe 2 abgesetzt werden kann und das angetriebene Rad 6 in Berührung mit dem Boden 1 bleibt.

Die Lagerung der Drehscheibe 2 kann durch Führungsrollen 16, die am Rand 17 der Drehscheibe 2 angeordnet sind, verbessert werden.

Im Ausführungsbeispiel nach den Fig. 8 bis 10 ist der Transportwagen 4 mit einer über einen Zylinder 9 absenkbaren Stütze 10 versehen. Die Stütze 10 weist eine kreisrunde Scheibe auf, die am Boden aufliegt, wenn der Transportwagen gedreht wird. Hat der Transportwagen 4 die gewünschte Stellung erreicht, wird die Stütze 10 abgesenkt und die zwei nicht angetriebenen Räder 5 des Transportwagens 4 werden, wie in der Fig. 9 gezeigt, leicht angehoben. Anschließend wird das angetriebene Rad 6 wiederum um 90° geschwenkt, und der Transportwagen 4 wird über den Fahrzeugantrieb gedreht. In der gewünschten Endstellung wird das angetriebene Rad 6 wiederum gerade gestellt, die absenkbare Stütze 10 eingezogen und zum Fahrgestell des Transportwagens 4 bewegt und damit vom Boden 1 abgehoben, und der Transportwagen 4 kann wiederum linear verfahren werden.

Der Transportwagen 4 ist in beiden Ausführungsbeispielen vorteilhaft mit einer Hubgabel für das Anheben einer Nutzlast, beispielsweise eines Pkws vorgesehen.

## Patentansprüche

1. Dreheinrichtung für Lasten mit einer Drehscheibe (2) und einem darauf fahrbaren Transportwagen (4), dadurch gekennzeichnet, daß die Drehscheibe (2) antriebslos ausgeführt ist und der Transportwagen (4) mindestens drei Räder (5, 6) aufweist, von denen mindestens eines lenkbar und angetrieben ist und daß dieses Rad (6) während des Drehvorganges auf einer ortsfesten Fahrbahn verfahrbar ist, während die anderen Räder (5) sich auf der Drehscheibe (2) abstützen.

2. Dreheinrichtung nach Anspruch 1, dadurch gekennzeichnet, daß die Drehscheibe (2) zumindestens bereichsweise einen kreisförmigen Umriß aufweist.

3. Dreheinrichtung nach Anspruch 2, dadurch gekennzeichnet, daß die Drehscheibe (2) eine zum Rand offene Aussparung (7) aufweist, in der das angetriebene Rad (6) des Transportwagens (4) aufgenommen ist.

4. Dreheinrichtung nach Anspruch 2, dadurch gekennzeichnet, daß der Rand der Drehscheibe (2) einem Kreisbogen und einer Sehne (15) entspricht.

5. Dreheinrichtung nach einem der Ansprüche 1 bis 4, dadurch gekennzeichnet, daß die Drehscheibe (2) um eine zentrische Achse (3) drehbar ist.

6. Dreheinrichtung nach einem der Ansprüche 1 bis 5, dadurch gekennzeichnet, daß die Drehscheibe (2) nach oben vorstehende Anschläge (8) aufweist, die sich beiderseits des Transportwagens (4) befinden.

7. Dreheinrichtung nach einem der Ansprüche 1 bis 6, dadurch gekennzeichnet, daß eine Sperreinrichtung für die Drehscheibe (2) vorgesehen ist.

8. Dreheinrichtung nach einem der Ansprüche 1 bis 7, dadurch gekennzeichnet, daß am Rand der Drehscheibe (2) ortsfeste Führungselemente angeordnet sind.

9. Dreheinrichtung nach Anspruch 8, dadurch gekennzeichnet, daß die Führungselemente von Rollen (16) gebildet werden.

10. Dreheinrichtung für Lasten mit einer Drehscheibe und einem darauf fahrbaren Transportwagen, dadurch gekennzeichnet, daß am Transportwagen (4) unterhalb des Fahrgestells eine nach unten absenkbare Stütze (10) angeordnet ist, mittels der der Transportwagen (2) derart anhebbar ist, daß lediglich ein lenkbares und antreibbares Rad (6) mit Bodenkontakt verbleibt.

11. Dreheinrichtung nach einem der Ansprüche 1 bis 10, dadurch gekennzeichnet, daß der Transportwagen (4) mit einer Hubgabel für das Anheben einer Nutzlast versehen ist.
